# EUROPEAN PATENT APPLICATION

(11) **EP 4 410 866 A1**
(43) Date of publication of application: **07.08.2024**
(21) Application number: 22875593.0
(22) Date of filing: 02.08.2022
(51) Int. Cl.: C08G 71/04

(54) **FOAMABLE RESIN COMPOSITION, FOAM BODY, METHOD FOR PRODUCING FOAM BODY, AND FOAMABLE CURING AGENT**

(30) Priority: 30.09.2021 JP 2021161072
(71) Applicant: MITSUBISHI GAS CHEMICAL COMPANY, INC., Chiyoda-ku Tokyo 100-8324 (JP)
(72) Inventor: KAWASHIMA, Yuki, Hiratsuka-shi, Kanagawa 254-0016 (JP); KOUNO, Kazuki, Hiratsuka-shi, Kanagawa 254-0016 (JP)
(74) Representative: Gille Hrabal Partnerschaftsgesellschaft mbB Patentanwälte
(86) International application number: PCT/JP2022/029688
(87) International publication number: WO 2023/053716

(57) **Abstract**

A foamable resin composition for molding a polyhydroxyurethane resin foam, including: the foamable resin composition including a foamable curing agent (A) including a reaction product (a2) of an amine compound (a1), and carbon dioxide and a cyclic carbonate compound (B) having 2 or more cyclic carbonate groups; a polyhydroxyurethane resin foam obtained by foam molding the foamable resin composition; a method for producing a polyhydroxyurethane resin foam including a step of foam molding the foamable resin composition; and a foamable curing agent for molding a polyhydroxyurethane resin foam, including a reaction product (a2) of an amine compound (a1) and carbon dioxide.

## Description

### Technical Field

The present invention relates to a foamable resin composition, a foam, a method for producing a foam and a foamable curing agent.

### Background Art

Polyurethane resins have, for example, excellent mechanical strength, flexibility, abrasion resistance, and oil resistance, and are widely used as resin for paints and adhesives. In recent years, polyhydroxyurethane resins, which have both a urethane bond and a hydroxyl group in the chemical structure, have been developed as a new polyurethane resin, and their industrial applications are expected. Polyhydroxyurethane resins, like existing polyurethane resins, have excellent mechanical strength, and applications that take advantage of the functionality derived from hydroxyl groups, which is not found in existing polyurethane resins, are being considered (see, for example, Patent Literature 1).

In addition, polyurethane resin foams are used in various heat insulators and panel core materials, for example, because of their excellent heat insulation, mechanical strength, and water resistance. Halogen-containing CFC hydrocarbons such as chlorofluorocarbon or fluorocarbon have conventionally been used as the foaming agent, but their use has become problematic due to high environmental impacts (see, for example, Patent Literature 2).

### Citation List

### Patent Literature

PTL1: JP 2021-42267 A
PTL2: JP 2004-339437 A

### Summary of Invention

### Technical Problem

The present invention provides a novel method for producing a polyhydroxyurethane resin foam, which can reduce environmental impacts, and a foamable resin composition and a foamable curing agent used for the method.

### Solution to Problem

The present inventors have conducted intensive studies to solve the above problem. As a result, the present inventors have found that the amount of use of a conventional environmentally harmful blowing agent can be reduced by using a reaction product of an amine compound and carbon dioxide as a foamable curing agent for molding a polyhydroxyurethane resin foam, and thus environmental impacts in producing polyhydroxyurethane resin foam can be reduced, and have completed the present invention.

Accordingly, the present invention provides the following foamable resin composition, foam, method for producing a foam, and foamable curing agent.

[1] A foamable resin composition for molding a polyhydroxyurethane resin foam, comprising:
   a foamable curing agent (A) comprising a reaction product (a2) of an amine compound (a1), and
   carbon dioxide and a cyclic carbonate compound (B) having 2 or more cyclic carbonate groups.
[2] The foamable resin composition according to [1] above, wherein a percentage increase of a mass of the amine compound (a1) calculated by the following equation when the amine compound (a1) is left to stand in an air environment of 23°C and 50% RH for a week is 10% by mass or more and 50% by mass or less:
   percentage increase of mass of amine compound (a1) [% by mass] = 100 × amount of increase of mass of amine compound (a1) (g) / (mass of amine compound (a1) (g) + amount of increase of mass of amine compound (a1) (g)).
[3] The foamable resin composition according to [1] or [2] above, wherein the amine compound (a1) comprises a cyclic amine compound (a11) having a cyclic structure.
[4] The foamable resin composition according to [3] above, wherein the cyclic amine compound (a11) has an amino group bonded to a primary carbon atom.
[5] The foamable resin composition according to [3] or [4] above, wherein the cyclic structure of the cyclic amine compound (a11) comprises at least one selected from the group consisting of a five-membered ring and a six-membered ring.
[6] The foamable resin composition according to any one of [1] to [5] above, wherein the amine compound (a1) has 2 or more and 6 or less amino groups.
[7] The foamable resin composition according to any one of [1] to [6] above, wherein a content of a blowing agent other than the foamable curing agent (A) in the foamable resin composition is 5% by mass or less.
[8] The foamable resin composition according to any one of [1] to [7] above, wherein the cyclic carbonate group in the cyclic carbonate compound (B) comprises a 5-membered cyclic carbonate group.
[9] The foamable resin composition according to any one of [1] to [8] above, wherein the amine compound (a1) comprises at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, and isophoronediamine and derivatives thereof.
[10] The foamable resin composition according to any one of [1] to [9] above, wherein the content of the foamable curing agent (A) in the foamable resin composition is such that the ratio of the number of amino groups in the foamable curing agent (A) to the number of cyclic carbonate groups in the cyclic carbonate compound (B) (number of amino groups/ number of cyclic carbonate groups) is 0.5 or more and 1.5 or less.
[11] A polyhydroxyurethane resin foam obtained by foam molding the foamable resin composition according to any one of [1] to [10] above.
[12] A method for producing a polyhydroxyurethane resin foam, comprising a step of foam molding the foamable resin composition according to any one of [1] to [10] above.
[13] A foamable curing agent for molding a polyhydroxyurethane resin foam, comprising:
   a reaction product (a2) of an amine compound (a1) and carbon dioxide.
[14] The foamable curing agent according to [13] above, wherein a percentage increase of a mass of the amine compound (a1) calculated by the following equation when the amine compound (a1) is left to stand in an air environment of 23°C and 50% RH for a week is 10% by mass or more and 50% by mass or less:
   percentage increase of mass of amine compound (a1) [% by mass] = 100 × amount of increase of mass of amine compound (a1) (g) / (mass of amine compound (a1) (g) + amount of increase of mass of amine compound (a1) (g)).
[15] The foamable curing agent according to [13] or [14] above, wherein the amine compound (a1) comprises a cyclic amine compound (a11) having a cyclic structure.
[16] The foamable curing agent according to [15] above, wherein the cyclic amine compound (a11) has an amino group bonded to a primary carbon atom.
[17] The foamable curing agent according to [15] or [16] above, wherein the cyclic structure of the cyclic amine compound (a11) comprises at least one selected from the group consisting of a five-membered ring and a six-membered ring.
[18] The foamable curing agent according to any one of [13] to [17] above, wherein the amine compound (a1) has 2 or more and 6 or less amino groups.
[19] The foamable curing agent according to any one of [13] to [18] above, wherein the amine compound (a1) comprises at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, and isophoronediamine and derivatives thereof.

### Advantageous Effect of Invention

The present invention provides a novel method for producing a polyhydroxyurethane resin foam, which can reduce environmental impacts, and a foamable resin composition and a foamable curing agent used for the method.

### Description of Embodiments

Embodiments of the present invention (hereinafter simply referred to as "the present embodiment") will be described in detail. The following present embodiments illustrate the present invention and do not limit the present invention. The present invention may be practiced with modification within the gist of the present invention. In the present embodiments, preferred specifications may be optionally employed and combination of preferred specifications are more preferred. In the present embodiments, the term "XX to YY" means "XX or more and YY or less."

### [Foamable resin composition (C)]

The foamable resin composition (C) of the present invention is for molding a polyhydroxyurethane resin foam, comprising: a foamable curing agent (A) comprising a reaction product (a2) of an amine compound (a1) and carbon dioxide, and a cyclic carbonate compound (B) having 2 or more cyclic carbonate groups.

According to the foamable resin composition (C) of the present invention, the amount of use of a conventional environmentally harmful blowing agent can be reduced by using a reaction product (a2) of an amine compound (a1) and carbon dioxide as a foamable curing agent (A) for molding a polyhydroxyurethane resin foam, and thus environmental impacts in producing polyhydroxyurethane resin foam can be reduced.

According to the foamable resin composition (C) of the present invention, a polyhydroxyurethane resin foam can be produced by using a foamable curing agent (A) comprising a reaction product (a2) of an amine compound (a1) and carbon dioxide. The reason is not clear ,but is assumed to be as follows.

First, by heating the foamable resin composition (C), an amine compound (a1) and carbon dioxide are generated from the reaction product (a2). At that stage, the resulting carbon dioxide causes foaming of the foamable resin composition (C), and polyaddition reaction of the resulting amine compound (a1) and the cyclic carbonate compound (B) occurs, and thus the foamable resin composition (C) is cured to give the polyhydroxyurethane resin foam (D).

### <Foamable curing agent (A)>

The foamable curing agent (A) comprises a reaction product (a2) of an amine compound (a1) and carbon dioxide.

It is preferable that the amine compound (a1) comprises a cyclic amine compound (a11) having a cyclic structure from the viewpoint of the improvement of the reactivity with carbon dioxide and foamability. Furthermore, it is preferable that the cyclic amine compound (a11) has an amino group bonded to a primary carbon atom. Such an amino group is less likely to cause steric hindrance, and thus carbon dioxide is easily absorbed.

The cyclic amine compound (a11) is an amine compound having a cyclic structure. Examples of cyclic structures in the cyclic amine compound (a11) include an alicyclic hydrocarbon structure, an aromatic hydrocarbon structure, and a heterocyclic structure with a heteroatom in the ring. It is preferable that the cyclic amine compound (a11) has at least one structure selected from the group consisting of an alicyclic hydrocarbon structure and an aromatic hydrocarbon structure, and it is more preferable that the cyclic amine compound (a11) has an alicyclic hydrocarbon structure from the viewpoint of the improvement of the reactivity with carbon dioxide and foamability.

In this regard, the alicyclic hydrocarbon structure in the present embodiment refers to a non-aromatic, saturated or unsaturated cyclic structure consisting of carbon and hydrogen, excluding a heterocyclic structure having a heteroatom in the ring. The heterocyclic structure means a heterocyclic structure containing a heteroatom in the ring.

When the cyclic amine compound (a11) may take the form of both a cis-body and a trans-body, the cyclic amine compound (a11) may be any one of a cis-body, a trans-body and a mixture of a cis-body and a trans-body.

The cyclic structure of the cyclic amine compound (a11) preferably has at least one selected from the group consisting of a five-membered ring and a six-membered ring, and more preferably a six-membered ring from the viewpoint of the improvement of the reactivity with carbon dioxide and foamability.

It is preferable that the cyclic amine compound (a11) has a cyclic structure from the viewpoint of the improvement of the reactivity with carbon dioxide and foamability. More specifically, it is preferable that the cyclic amine compound (a11) is a monocyclic compound.

Examples of alicyclic hydrocarbon structures in the cyclic amine compound (a11) include a cyclopropane ring, a cyclobutane ring, a cyclopentane ring, a cyclohexane ring, a cycloheptane ring and a cyclooctane ring. Of the above ring structures, a cyclopentane ring and a cyclohexane ring are preferred, and a cyclohexane ring is more preferred, and a 1,3-substituted cyclohexane ring is more preferred.

The number of amino groups in the amine compound (a1) is preferably 2 or more and 6 or less, more preferably 2 or more and 4 or less, even more preferably 2 or more and 3 or less, and still more preferably 2 from the viewpoint of the improvement of the reactivity with carbon dioxide, curability and foamability.

An amino group having a nitrogen-hydrogen bond is preferred as the amino group, and at least one amino group selected from the group consisting of a primary amino group and a secondary amino group is more preferred, and a primary amino group is further preferred from the viewpoint of the improvement of the reactivity with carbon dioxide, curability and foamability.

The amine compound (a1) is preferably at least one selected from the group consisting of o-xylylenediamine and derivatives thereof, m-xylylenediamine and derivatives thereof, p-xylylenediamine and derivatives thereof, limonenediamine and derivatives thereof, 4,4'-methylenebis(cyclohexylamine) and derivatives thereof, N-(2-aminoethyl)piperazine and derivatives thereof, 2,5-bisaminomethylfuran and derivatives thereof, 2,5-bis(aminomethyl)tetrahydrofuran and derivatives thereof, and a compound represented by the following formula (1):

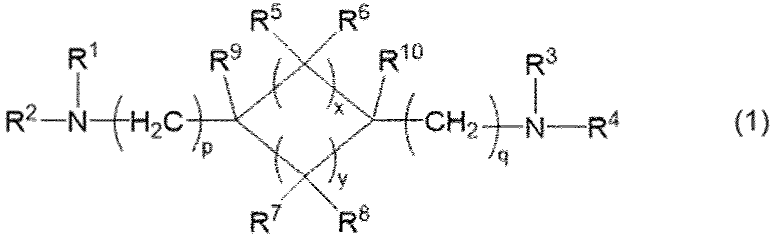

In the above formula (1), R¹ to R⁴ each independently represent a hydrogen atom, or a hydrocarbon group having 1 or more and 10 or less carbon atoms and optionally having at least one substituent selected from the group consisting of an amino group, a cyano group and a phenyl group; R⁵ to R¹⁰ each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.

R¹ to R⁴ are each independently a hydrogen atom, or a hydrocarbon group having 1 or more and 10 or less carbon atoms and optionally having at least one substituent selected from the group consisting of an amino group, a cyano group and a phenyl group; preferably a hydrogen atom, or an alkyl group having 1 or more and 4 or less carbon atoms and optionally having at least one substituent selected from the group consisting of an amino group, a cyano group and a phenyl group; more preferably a hydrogen atom, or an alkyl group having 1 or more and 4 or less carbon atoms and optionally having at least one substituent selected from the group consisting of an amino group and a cyano group; even more preferably a hydrogen atom, or an alkyl group having 2 or more and 4 or less carbon atoms and optionally having at least one substituent selected from the group consisting of an amino group and a cyano group, and still more preferably a hydrogen atom.

The number of carbon atoms in the hydrocarbon group of R¹ to R⁴ is each independently 1 or more, preferably 2 or more and 10 or less, preferably 5 or less, more preferably 4 or less, and even more preferably 3 or less.

R⁵ to R¹⁰ are each independently a hydrogen atom or a hydrocarbon group having 1 or more and 4 or less carbon atoms, preferably a hydrogen atom or an alkyl group having 1 or more and 4 or less carbon atoms, more preferably a hydrogen atom or an alkyl group having 1 or more and 3 or less carbon atoms, and even more preferably a hydrogen atom or a methyl group, and still more preferably a hydrogen atom.

The number of carbon atoms in the hydrocarbon group of R⁵ to R¹⁰ is each independently 1 or more and 4 or less, preferably 1 or 2, and more preferably 1.

p and q are each independently 0 or more, and preferably 1 or more, and 4 or less, preferably 2 or less and more preferably 1. At least one of p and q is 1 or more.

x and y each independently represents an integer of 0 or more and 6 or less, respectively, and x + y is 1 or more and 6 or less. x + y is preferably 2 or more, more preferably 3 or more, and even more preferably 4 or more to increase the amount of carbon dioxide absorbed and to improve foamability. x + y is preferably 5 or less and more preferably 4 to increase the amount of carbon dioxide absorbed and to improve foamability. In other words, the alicyclic hydrocarbon structure is preferably a five-membered ring or a six-membered ring, and more preferably a six-membered ring. When x + y is 4, it is preferable that x is 1 and y is 3.

As the amine compound (a1), at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, isophoronediamine and derivatives thereof, 4,4'-methylenebis(cyclohexylamine) and derivatives thereof, N-(2-aminoethyl)piperazine and derivatives thereof, 2,5-bisaminomethylfuran and derivatives thereof and 2,5-bis(aminomethyl)tetrahydrofuran and derivatives thereof is preferred from the viewpoint of the improvement of the reactivity with carbon dioxide, curability and foamability. At least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof and isophoronediamine and derivatives thereof is more preferred. At least one selected from the group consisting of m-xylylenediamine and derivatives thereof, bis(aminomethyl)cyclohexane and derivatives thereof, limonenediamine and derivatives thereof and isophoronediamine and derivatives thereof are even more preferred. At least one selected from the group consisting of bis(aminomethyl)cyclohexane and derivatives thereof, limonenediamine and derivatives thereof and isophoronediamine and derivatives thereof are still more preferred. Bis(aminomethyl)cyclohexane and derivatives thereof are yet more preferred, 1,3-bis(aminomethyl)cyclohexane and derivatives thereof are further preferred, and 1,3-bis(aminomethyl)cyclohexane is still further preferred.

In this regard, examples of derivatives of the above amines include a compound in which at least one of the hydrogen atoms in the amino group is substituted by a hydrocarbon group having 1 or more and 10 or less carbon atoms and optionally having at least one substituent selected from the group consisting of an amino group, a cyano group and a phenyl group, preferably alkyl group having 1 or more and 4 or less carbon atoms and optionally having at least one substituent selected from the group consisting of an amino group, cyano group and a phenyl group, more preferably an alkyl group having 1 or more and 4 or less carbon atoms and optionally having at least one substituent selected from the group consisting of an amino group and a cyano group, even more preferably an alkyl group having 2 or more and 4 or less carbon atoms and optionally having at least one substituent selected from the group consisting of an amino group and a cyano group.

Examples of derivatives of the above amines also include a compound in which at least some of the hydrogen atoms in the cyclic structure are substituted by a hydrocarbon group having 1 or more and 4 or less carbon atoms, preferably an alkyl group having 1 or more and 3 or less carbon atoms, more preferably a methyl group or an ethyl group, and even more preferably a methyl group.

These amine compounds (a1) may be used alone or in combination of 2 or more.

The ratio of the cyclic amine compound (a11) in the amine compound (a1) in the reaction product (a2) is preferably 50 parts by mass or more, more preferably 60 parts by mass or more, even more preferably 70 parts by mass or more, still more preferably 80 parts by mass or more, yet more preferably 90 parts by mass or more and further preferably 95 parts by mass or more, and preferably 100 parts by mass or less based on the total amount of the amine compound (a1) of 100 parts by mass, from the viewpoint of the improvement of foamability.

Examples of amine compounds (a1) other than the cyclic amine compound (a11) include an acyclic aliphatic amine compound such as monoethanolamine, 2-amino-2-methyl-1-propanol, diethanolamine, 2-(methylamino)ethanol, 2-(ethylamino)ethanol, 2-(dimethylamino)ethanol, 2-(diethylamino)ethanol, ethylenediamine, N,N'-dimethylethylenediamine and diethylenetriamine.

The amine compound (a1) has a maximum carbon dioxide release temperature measured by the following method of preferably 200°C or less, more preferably 180°C or less, even more preferably 160°C or less, still more preferably 150°C or less, yet more preferably 140°C or less, yet more preferably 135°C or less, and yet even more preferably 130°C or less to improve carbon dioxide release performance and foamability. The lower limit of the above maximum carbon dioxide release temperature is not particularly limited, and for example 40°C or more.

### (Method)

The amine compound (a1) with carbon dioxide absorbed is heated at a heating rate of 10°C/ minute from 23°C to 250°C, and the temperature at which the amount of heat absorbed due to desorption of carbon dioxide reaches the maximum is measured, and the temperature is defined as the maximum carbon dioxide release temperature. In this regard the amine compound (a1) with carbon dioxide absorbed may be prepared by leaving 5 mmol of the amine compound (a1) to stand in air at 23°C and 50%RH for 24 hours.

The amine compound (a1) has an acid dissociation constant (pKa) of preferably 8.0 or more, more preferably 8.5 or more, and even more preferably 9.0 or more to increase the amount of carbon dioxide absorbed and improve foamability. The amine compound (a1) has an acid dissociation constant (pKa) of preferably 12.0 or less, more preferably 11.5 or less, and even more preferably 11.0 or less to improve the carbon dioxide release performance and improve foamability.

The acid dissociation constant of the amine compound (a1) is measured by the following measurement method based on acid-base titration.
(1) 0.2 g of the amine compound (a1) is dissolved in 30 mL of purified water.
(2) The acid dissociation constant (pKa) is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The temperature in the measurement is 25 ± 2°C.

The amine compound (a1) has a molecular weight of preferably 110 or more, more preferably 120 or more, and even more preferably 130 or more in order to suppress weight reduction in the heat treatment for releasing carbon dioxide, and preferably 250 or less, more preferably 200 or less, and even more preferably 180 or less to increase the amount of carbon dioxide absorbed and improve foamability.

The maximum endothermic temperature of the amine compound (a1) calculated by the following method is preferably 130°C or more, more preferably 140°C or more, and even more preferably 150°C or more in order to suppress weight reduction in the heat treatment for releasing carbon dioxide, and preferably 260°C or less, more preferably 230°C or less, even more preferably 210°C or less, and still more preferably 190°C or less to increase the amount of carbon dioxide absorbed and improve foamability.

### (Method)

The amine compound (a1) is heated at a heating rate of 10°C/ minute from 23°C to 350°C and the temperature at which the amount of heat absorbed due to evaporation of the amine compound (a1) reaches the maximum is measured, and the temperature is defined as the maximum endothermic temperature of the amine compound (a1).

The amine compound (a1) has an amine value of preferably 400 mg KOH/ g or more, more preferably 500 mg KOH/ g or more, even more preferably 600 mg KOH/g or more, still more preferably 650 mg KOH/g or more, and yet more preferably 700 mg KOH/g or more and preferably 1,500 mg KOH/g or less, more preferably 1,400 mg KOH/g or less, even more preferably 1,300 mg KOH/g or less, still more preferably 1,100 mg KOH/g or less, even more preferably 1,000 mg KOH/g or less, and yet more preferably 850 mg KOH/g or less to increase the amount of carbon dioxide absorbed and improve foamability. The amine value refers to the amount of amine in a compound, which is parts per million of potassium hydroxide (KOH) equivalent to the amount of acid necessary for neutralizing 1 g of the compound.

The amine value may be measured by the following method according to JIS K7237-1995.
(1) 0.1 g of the amine compound (a1) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The percentage increase of the mass of the amine compound (a1) calculated by the following equation after leaving the amine compound (a1) to stand in an air environment of 23°C and 50% RH for a week is preferably 10% by mass or more, more preferably 15% by mass or more, even more preferably 18% by mass or more, still more preferably 20% by mass or more and yet more preferably 23% by mass or more, and is preferably 50% by mass or less, more preferably 45% by mass or less, even more preferably 40% by mass or less, still more preferably 30% by mass or less and yet more preferably 28% by mass or less to improve foamability of the polyhydroxyurethane resin foam (D).

Percentage increase of mass of amine compound (a1) [% by mass] = 100 × amount of increase of mass of amine compound (a1) (g) / (mass of amine compound (a1) (g) + amount of increase of mass of amine compound (a1) (g)).

The percentage increase of the mass of the amine compound (a1) may be specifically measured by the method described in Examples.

The foamable curing agent (A) may be obtained by contacting an amine compound (a1) with a gas containing carbon dioxide to react the amine compound (a1) with carbon dioxide.

The reaction product (a2) of the amine compound (a1) and carbon dioxide includes, for example, at least one selected from the group consisting of carbamic acid, carbamate, carbonate and hydrogen carbonate, which are a reaction product of the amine compound (a1) and carbon dioxide.

The foamable curing agent (A) may include a component other than the reaction product (a2), which is, for example, an amine compound (a1) unreacted with carbon dioxide.

To achieve the advantageous effect of the present invention, the total amount of the amine compound (a1) unreacted with carbon dioxide and the reaction product (a2) in the foamable curing agent (A) is preferably 50% by mass or more, more preferably 70% by mass or more, even more preferably 80% by mass or more, still more preferably 90% by mass or more, yet more preferably 95% by mass or more and further preferably 98% by mass or more, and preferably 100% by mass or less when the total amount of the foamable curing agent (A) is taken as 100% by mass to increase the amount of carbon dioxide absorbed and improve foamability.

The content of the amine compound (a1) unreacted with carbon dioxide in the foamable curing agent (A) is preferably 5% by mole or more, more preferably 10% by mole or more, even more preferably 30% by mole or more, still more preferably 50% by mole or more, and preferably 95% by mole or less when the total amount of the amine compound unreacted with carbon dioxide and the reaction product (a2) in the foamable curing agent (A) is taken as 100% by mole to improve appearance and foamability of the foam.

### <Cyclic carbonate compound (B)>

The cyclic carbonate compound (B) has two or more cyclic carbonate groups. It is preferable that the cyclic carbonate group in the cyclic carbonate compound (B) includes a five-membered cyclic carbonate group in order to improve the reactivity with the amine compound (a1).

The cyclic carbonate compound (B) is not particularly limited as long as the compound has two or more cyclic carbonate groups in the molecule. Examples thereof include a cyclic carbonate compound having an aromatic skeleton such as a benzene skeleton, a polycyclic aromatic skeleton or a condensed polycyclic aromatic skeleton, an aliphatic cyclic carbonate compound and an alicyclic carbonate compound.

It is preferable that the cyclic carbonate compound (B) has two or more five-membered cyclic carbonate groups from the viewpoint of the improvement of reactivity with the amine compound (a1).

Examples of cyclic carbonate compounds having an aromatic skeleton includes a compound represented by the following formula (2).

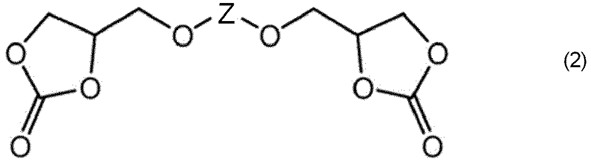

Z in the formula (2), for example, is any structure shown below.

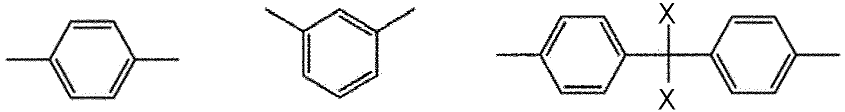

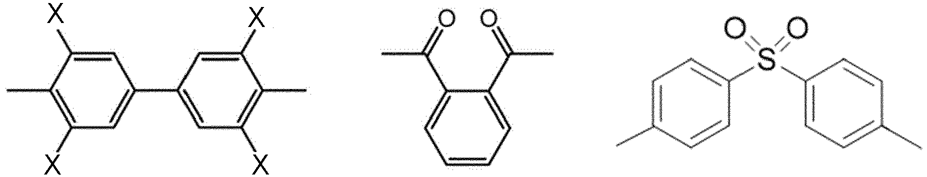

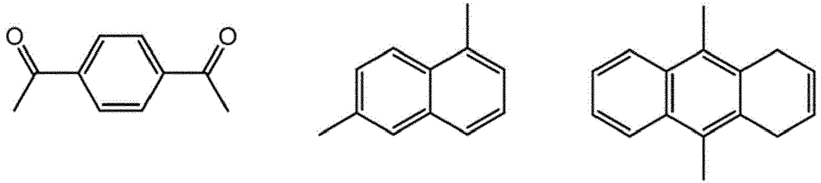

X in the formula is a hydrogen atom or a methyl group.

Examples of aliphatic cyclic carbonate compounds and alicyclic carbonate compounds include the following compounds.

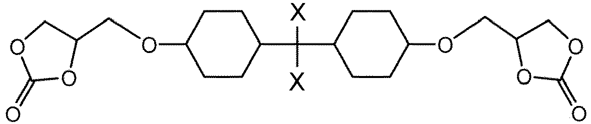

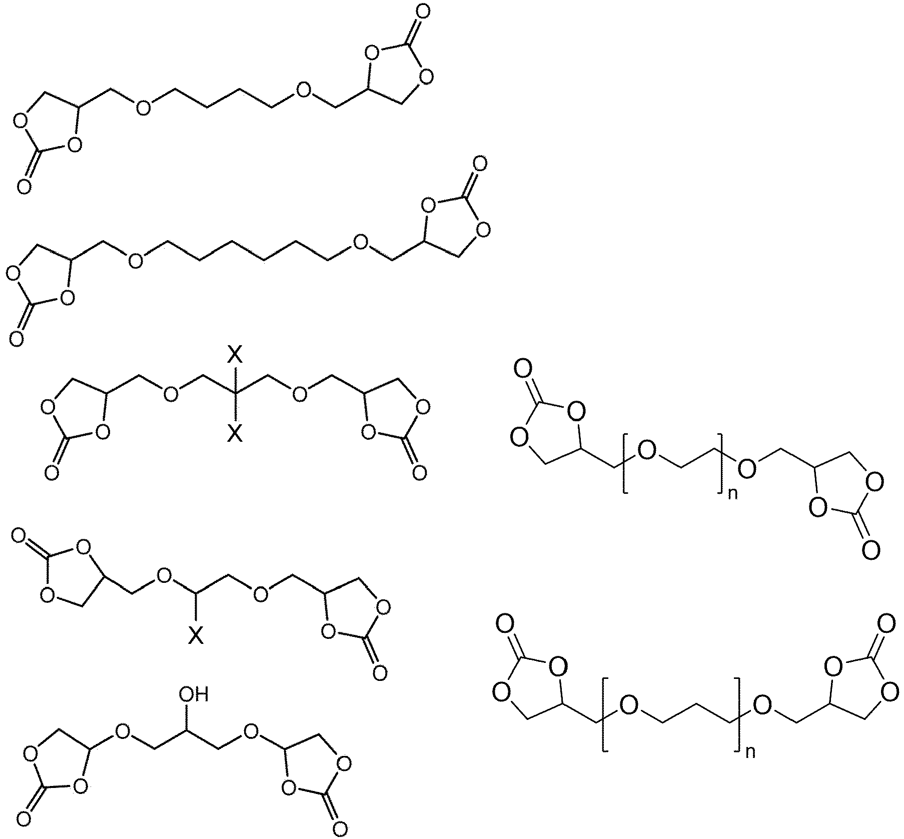

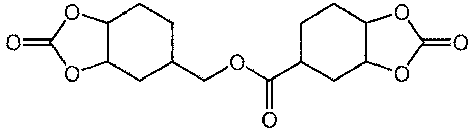

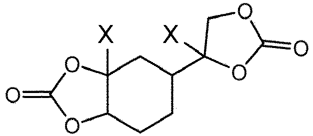

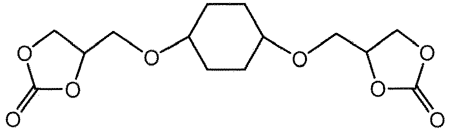

X in the formula is a hydrogen atom or a methyl group, and n is the average number of moles added of the alkyleneoxy group, which is a number of 2 or more and 20 or less.

Furthermore, a compound whose molecular weight is increased by adding an amine compound to a cyclic carbonate compound may be used as the cyclic carbonate compound (B) in order to improve stability of foam.

Examples of amine compounds that can be added to the cyclic carbonate compound include the cyclic amine compound (a11) described above; and a non-cyclic aliphatic amine compounds such as ethylenediamine, 1,3-diaminopropane, 1,4-diaminobutane, 1,5-diaminopentane, 1,6-diaminohexane, 1,8-diaminooctane, 1,10-diaminodecane, 1,12-diaminododecane, diethylenetriamine and triethylenetetramine.

Referring to the method for adding an amine compound to the cyclic carbonate compound, for example, a raw material cyclic carbonate compound is reacted at a temperature of 50°C or more and 250°C or less for 10 minutes or more and 12 hours or less to add an amine compound to the cyclic carbonate compound.

Of the above, a compound represented by the above formula (2) is preferred, and a bis-A dicarbonate compound represented by the following formula is more preferred as the cyclic carbonate compound (B).

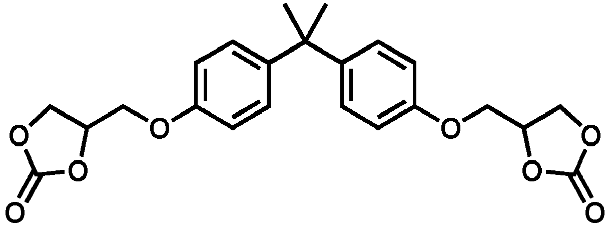

The cyclic carbonate compound (B) may be obtained, for example, by a reaction between an epoxy compound and carbon dioxide. More specifically, reacting the raw material epoxy compound in the presence of a catalyst at a temperature of 0°C or more and 160°C or less in a carbon dioxide atmosphere at an atmospheric pressure or more to pressurization under 1 MPa or less for 1 hour or more and 48 hours or less can give a cyclic carbonate compound with carbon dioxide immobilized at the ester moiety.

Examples of catalysts used for the reaction between the epoxy compound and carbon dioxide include halogenated salts such as lithium chloride, lithium bromide, lithium iodide, sodium chloride, sodium bromide and sodium iodide; and quaternary ammonium salt. The amount of the catalyst used, for example, is 1 part by mass or more and 50 parts by mass or less per 100 parts by mass of the epoxy compound. The reaction between the epoxy compound and carbon dioxide may also be performed in the presence of an organic solvent.

The content of the foamable curing agent (A) in the foamable resin composition (C) is such that the ratio of the number of amino groups in the foamable curing agent (A) to the number of cyclic carbonate groups in the cyclic carbonate compound (B) (the number of the amino groups/ the number of the cyclic carbonate groups) is preferably 0.5 or more, more preferably 0.6 or more, even more preferably 0.7 or more, still more preferably 0.8 or more and yet more preferably 0.9 or more to improve foamability. The content of the foamable curing agent (A) is such that the above ratio is preferably 1.5 or less, more preferably 1.4 or less, even more preferably 1.3 or less, still more preferably 1.2 or less, and yet more preferably 1.1 or less from the viewpoint of the improvement of the heat resistance, chemical resistance, curability, and mechanical strength of the polyhydroxyurethane resin foam (D).

The number of amino groups in the foamable curing agent (A) means the sum of the number of amino groups in the amine compound (a1) in the reaction product (a2) before reacting with carbon dioxide and the number of amino groups in the amine compound (a1) unreacted with carbon dioxide in the foamable curing agent (A).

The foamable resin composition (C) may also include other components such as a modifying component including a filler and a plasticizer, a flow modifying component such as a thixotropic agent, a pigment, a leveling agent, a tackifier, elastomer fine particles, a curing accelerator, an antifoaming agent and a chemical blowing agent, depending on applications.

The total content of the foamable curing agent (A) and the cyclic carbonate compound (B) in the foamable resin composition (C) is preferably 50% by mass or more, more preferably 70% by mass or more, even more preferably 80% by mass or more, still more preferably 90% by mass or more, and yet more preferably 95% by mass or more to effectively attain effects of the present invention. The upper limit is 100% by mass.

The content of the blowing agent other than the foamable curing agent (A) in the foamable resin composition (C) is preferably 5% by mass or less, more preferably 3% by mass or less, even more preferably 1% by mass or less, still more preferably 0.5% by mass or less, and yet more preferably 0.1% by mass or less from the viewpoint of reduction of environmental impacts when producing the polyhydroxyurethane resin foam (D).

Examples of blowing agents other than the foamable curing agent (A) include a halogen-containing CFC hydrocarbon such as chlorofluorocarbon and fluorocarbon; an alicyclic hydrocarbon such as cyclopentane; an organic blowing agent such as dinitropentamethylenetetramine, azodicarbonamide, p,p'-oxybisbenzenesulfonylhydrazide; and an inorganic blowing agent such as sodium hydrogen carbonate.

### <Method for preparing foamable resin composition (C)>

The method for preparing the foamable resin composition (C) is not particularly limited. The foamable resin composition (C) may be produced by mixing the foamable curing agent (A), the cyclic carbonate compound (B) and if necessary, other components by a known method using a known apparatus.

### [Polyhydroxyurethane resin foam (D) and method for producing the same]

The polyhydroxyurethane resin foam (D) of the present invention is obtained by foam molding of the foamable resin composition (C). The method for producing a polyhydroxyurethane resin foam (D) of the present invention comprises a step of foaming the foamable resin composition (C).

In the step of foaming the foamable resin composition (C), an amine compound (a1) and carbon dioxide are generated from the reaction product (a2) by heating the foamable resin composition (C), and carbon dioxide causes the foamable resin composition (C) to foam, and at the same time the foamable resin composition (C) is cured by the reaction between the resulting amine compound (a1) and cyclic carbonate compound (B). This provides the polyhydroxyurethane resin foam (D).

The temperature and the time of heating in the step of foaming the foamable resin composition (C) may be optionally selected, and the temperature is preferably 50 to 250°C, more preferably 100 to 200°C, and even more preferably 120 to 180°C from the viewpoint of the reaction speed, productivity, and prevention of decomposition of raw materials. The reaction time is preferably 10 minutes to 12 hours, more preferably 15 minutes to 4 hours.

It is preferable that the method for producing a polyhydroxyurethane resin foam (D) of the present invention further comprises a step of obtaining a reaction product (a2) by contacting the amine compound (a1) with a gas having a concentration of carbon dioxide of 0.01% by volume or more and 10% by volume or less to react the amine compound (a1) with carbon dioxide, before the step of foaming the foamable resin composition (C).

The gas has a carbon dioxide concentration of preferably 0.02% by volume or more, and more preferably 0.03% by volume or more, and preferably 5% by volume or less, more preferably 1% by volume or less, even more preferably 0.5% by volume or less, and still more preferably 0.1% by volume or less. It is more preferable that the gas having a concentration of carbon dioxide of 0.01% by volume or more and 10% by volume or less is air.

The reaction product (a2) is a reaction product of the amine compound (a1) and carbon dioxide, and includes, for example, at least one selected from the group consisting of carbamic acid, carbamate, carbonate and hydrogen carbonate, which are a reaction product of the amine compound and carbon dioxide.

The polyhydroxyurethane resin foam (D) has a density of preferably 0.05 g/cm³ or more, more preferably 0.10 g/ cm³ or more, even more preferably 0.15 g/ cm³ or more, and still more preferably 0.18 g/cm³ or more from the viewpoint of the improvement of mechanical strength. The polyhydroxyurethane resin foam (D) has a density of preferably 1.0 g/cm³ or less, more preferably 0.95 g/cm³ or less, even more preferably 0.90 g/ cm³ or less, still more preferably 0.80 g/cm³ or less, yet more preferably 0.70 g/cm³ or less, further preferably 0.60 g/cm³ or less, even further preferably 0.50 g/cm³ or less, still further preferably 0.40 g/cm³ or less and yet further preferably 0.38 g/cm³ or less from the viewpoint of the improvement of performance such as heat insulation, sound insulation and lightweight. The density of the polyhydroxyurethane resin foam (D) may be specifically measured by the method described in Examples.

### [Foamable curing agent]

The foamable curing agent of the present invention is for molding a polyhydroxyurethane resin foam and comprises a reaction product (a2) of an amine compound (a1) and carbon dioxide.

Since the foamable curing agent of the present invention can reduce the amount of use of the conventional blowing agent which has large environmental impacts in the production of polyhydroxyurethane resin foam, a novel method for producing a polyhydroxyurethane resin foam, which can reduce environmental impacts can be provided.

The respective components used for the foamable curing agent of the present invention and preferred embodiments thereof are the same as those for the foamable curing agent (A) in the foamable resin composition (C) of the present invention described above.

### Examples

Hereinafter the present invention will be described with reference to Examples, but the present invention is not limited to Examples. In the present Examples, the respective properties were measured by the following methods.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently the amine compound (5 mmol) was added to the Petri dish in the desiccator and the door was immediately closed to leave the amine compound to stand in the desiccator in an air environment at 23°C and 50%RH for 24 hours. The initial concentration of carbon dioxide was adjusted to about 400 ppm.

Then the amine compound was removed from the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/ minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

### (Maximum endothermic temperature of amine compound)

The maximum endothermic temperature of the amine compound was measured by subjecting the amine compound to DSC as described below. First, differential scanning calorimetry of the amine compound was performed under conditions of a temperature range of 23 to 350°C, a heating rate of 10°C/ minute and a nitrogen atmosphere using a differential thermogravimeter (product name DTG-60 made by Shimadzu Corporation). The temperature at which the amount of heat absorbed due to the evaporation of the amine compound was the maximum was calculated from the DSC curve obtained, and the temperature was determined as the maximum endothermic temperature of the amine compound.

### (Amine value of amine compound)

The amine value was measured by the following measurement method according to JIS K7237-1995.
(1) 0.1 g of the amine compound was dissolved in 20 mL of acetic acid.
(2) The amine value was calculated by titrating the solution prepared in (1) above with 0.1 N perchloric acid - acetic acid solution using an automatic potentiometric titrator (AT-610 made by Kyoto Electronics Manufacturing Co., Ltd.)

### (Acid dissociation constant (pKa) of amine compound)

The acid dissociation constant of the amine compound was measured by the following measurement method.
(1) 0.2 g of the amine compound was dissolved in 30 mL of purified water.
(2) The acid dissociation constant (pKa) was calculated by titrating the solution prepared in (1) above with 0.1 N perchloric acid - acetic acid solution using an automatic potentiometric titrator (AT-610 made by Kyoto Electronics Manufacturing Co., Ltd.).

The temperature in the measurement was 25 ± 2°C.

The following amine compounds and the cyclic carbonate compounds were used in Examples.

### (Amine compound)

MXDA: metaxylylenediamine (made by Mitsubishi Gas Chemical Company, Inc.)
1,3-BAC: 1,3-bis(aminomethyl)cyclohexane (made by Mitsubishi Gas Chemical Company, Inc.)
IPDA: isophoronediamine (made by Tokyo Chemical Industry Co., Ltd.).
AEP: N-(2-aminoethyl)piperazine (made by Tokyo Chemical Industry Co., Ltd.)
PACM: 4,4'-methylenebis(cyclohexylamine) (made by Tokyo Chemical Industry Co., Ltd.)

### (Cyclic carbonate compound)

bis-A dicarbonate compound: prepared according to the following Synthetic Example 1.

### (Synthetic example 1: production of bis-A dicarbonate compound)

DER332 (made by Olin, 80.0 g), which is a bis-A epoxy resin, tetrabutylammonium iodide (21.6 g) and dimethylacetamide (60 g) were added to a reactor equipped with a stirrer and a reflux condenser. With stirring the mixture, carbon dioxide was bubbled at a flow rate of 20 mL/ minute to create an atmosphere of carbon dioxide in the system. The reaction system was heated to 80°C under that condition and reacted for 20 hours. After the completion of the reaction, dimethylacetamide (200 g) was added to the system (added without cooling to room temperature because solid precipitates if the system is cooled). A flask was charged with 1.5 L of water and the reaction solution prepared above was gradually added to the flask with stirring to give a white solid. The white solid was filtered by suction filtration and then washed with methanol to give 52 g of a bis-A dicarbonate compound represented by the following formula (yield: 52%).

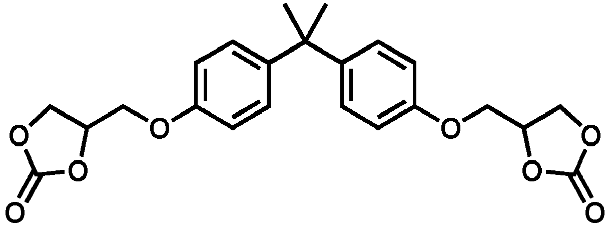

### Example 1

### (1) Absorption of carbon dioxide into amine compound

An amine compound, MXDA (40 mmol), was put in a container and left to stand in an air environment at 23°C and 50% RH for a week. By doing so MXDA and carbon dioxide in the air were reacted to give a carbonate of MXDA. At that stage, to suppress uneven reaction, the container in which the amine compound was placed was shaken as necessary so as not to leave unreacted MXDA.

Next, increase of the mass of MXDA was measured and the percentage increase of the mass of the amine compound was calculated by the following equation.

Percentage increase of mass of amine compound [% by mass] = 100 × amount of increase of mass of amine compound (g) / (initial mass of amine compound (g) + amount of increase of mass of amine compound (g))

### (2) Preparation of foamable resin composition

The initial number of amino groups in MXDA in (1) above was calculated and a bis-A dicarbonate compound was precisely weighed so that the number of amino groups/ the number of cyclic carbonate groups in the bis-A dicarbonate compound was 1.0.

Next, the carbonate of MXDA obtained in (1) and the bis-A dicarbonate compound were mixed with stirring for 2 minutes to give a foamable resin composition.

### (3) Production of polyhydroxyurethane resin foam

The foamable resin composition obtained in (2) was put in a mold with a length × width × depth of 12 cm × 12 cm × 1.2 cm, and heated under conditions of a heating temperature of 150°C and a heating time of 45 minutes using a hot air dryer to cure and foam the foamable resin composition. A polyhydroxyurethane resin foam was thus obtained. The foamable resin composition put in the mold had a thickness of about 3 mm before foaming. Furthermore, visual observation confirmed that a foam structure was formed in the resulting polyhydroxyurethane resin foam.

The resulting polyhydroxyurethane resin foam was evaluated as follows. The results obtained are shown in Table 1.

### (Evaluation of foamability)

The formability of the foamable resin composition was evaluated based on the film thickness and the density of the polyhydroxyurethane resin foam. A larger film thickness and a smaller density suggests excellent foamability.

The density of the polyhydroxyurethane resin foam was calculated from the mass and the volume of the foam.

### (Examples 2 to 5)

The respective polyhydroxyurethane resin foams were obtained in the same manner as in Example 1 except for changing the type of the amine compound to compounds shown in Table 1.

The resulting polyhydroxyurethane resin foam was evaluated for the above items. The results obtained are shown in Table 1. Furthermore, visual observation confirmed that a foam structure was formed in the resulting polyhydroxyurethane resin foam.

### (Example 6)

A polyhydroxyurethane resin foam was obtained in the same manner as in Example 1 except for changing the carbonate of MXDA to a mixture of the carbonate of MXDA and MXDA (carbonate of MXDA: MXDA = 1:9 (molar ratio)) and changing the mold for producing the polyhydroxyurethane resin foam to a mold with a length × width × depth of 7 cm × 12 cm × 0.9 cm. The foamable resin composition put in the mold had a thickness of about 1.5 mm before foaming. The resulting polyhydroxyurethane resin foam was evaluated for the above items. The results obtained are shown in Table 1.

**Table 1**

| | Amine compound | | | | | | | | Cyclic carbonate compound | Number of amino groups / Number of cyclic carbonate groups [-] | Evaluation of polyhydroxyurethane resin foam | | |
|---|---|---|---|---|---|---|---|---|---|---|---|---|---|
| | Name | Structural formula | Molecular weight [-] | Maximum CO₂ release temperature [°C] | Maximum endothermic temperature [°C] | Amine value [mg KOH/g] | pKa | Percentage increase of mass [% by mass] | | | Density [g/cm³] | Film thickness before foaming [mm] | Film thickness after foaming [mm] |
| Example 1 | MXDA | 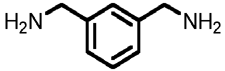 | 136.2 | 135.5 | 183.5 | 824 | 9.5 | 24.1 | bis-A dicarbonate compound | 1.0 | 0.356 | 3.0 | 4.56 |
| Example 2 | 1,3-BAC | 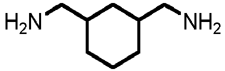 | 142.2 | 125.7 | 160.9 | 789 | 10.8 | 25.9 | bis-A dicarbonate compound | 1.0 | 0.330 | 2.5 | 4.77 |
| Example 3 | IPDA | 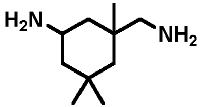 | 170.3 | 114.4 | 168.8 | 659 | 10.4 | 23.5 | bis-A dicarbonate compound | 1.0 | 0.406 | 2.5 | 3.24 |
| Example 4 | AEP | 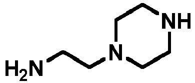 | 129.2 | 81.9 | 140.2 | 1303 | 8.9 | 43.7 | bis-A dicarbonate compound | 1.0 | 0.935 | 1.5 | 2.68 |
| Example 5 | PACM | 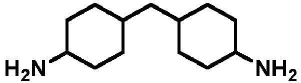 | 210.4 | 53.0 | 218.5 | 533 | 10.3 | 12.2 | bis-A dicarbonate compound | 1.0 | 0.608 | 2.0 | 1.91 |
| Example 6 | MXDA | 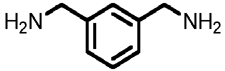 | 136.2 | 135.5 | 183.5 | 824 | 9.5 | 24.1 | bis-A dicarbonate compound | 1.0 | 0.194 | 1.5 | 7.05 |

Table 1 shows that a polyhydroxyurethane resin foam can be produced by using the foamable resin composition of Examples, without using a conventional environmentally harmful blowing agent.

### Industrial Applicability

The present invention provides a novel method for producing a polyhydroxyurethane resin foam, which can reduce environmental impacts, and a foamable resin composition and a foamable curing agent used for the method.

## Claims

1. A foamable resin composition for molding a polyhydroxyurethane resin foam, comprising:
a foamable curing agent (A) comprising a reaction product (a2) of an amine compound (a1) and carbon dioxide, and
a cyclic carbonate compound (B) having 2 or more cyclic carbonate groups.

2. The foamable resin composition according to claim 1, wherein a percentage increase of a mass of the amine compound (a1) calculated by the following equation when the amine compound (a1) is left to stand in an air environment of 23°C and 50% RH for a week is 10% by mass or more and 50% by mass or less:
percentage increase of mass of amine compound (a1) [% by mass] = 100 × amount of increase of mass of amine compound (a1) (g) / (mass of amine compound (a1) (g) + amount of increase of mass of amine compound (a1) (g)).

3. The foamable resin composition according to claim 1 or 2, wherein the amine compound (a1) comprises a cyclic amine compound (a11) having a cyclic structure.

4. The foamable resin composition according to claim 3, wherein the cyclic amine compound (a11) has an amino group bonded to a primary carbon atom.

5. The foamable resin composition according to claim 3 or 4, wherein the cyclic structure of the cyclic amine compound (a11) comprises at least one selected from the group consisting of a five-membered ring and a six-membered ring.

6. The foamable resin composition according to any one of claims 1 to 5, wherein the amine compound (a1) has 2 or more and 6 or less amino groups.

7. The foamable resin composition according to any one of claims 1 to 6, wherein a content of a blowing agent other than the foamable curing agent (A) in the foamable resin composition is 5% by mass or less.

8. The foamable resin composition according to any one of claims 1 to 7, wherein the cyclic carbonate group in the cyclic carbonate compound (B) comprises a 5-membered cyclic carbonate group.

9. The foamable resin composition according to any one of claims 1 to 8, wherein the amine compound (a1) comprises at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, and isophoronediamine and derivatives thereof.

10. The foamable resin composition according to any one of claims 1 to 9, wherein the content of the foamable curing agent (A) in the foamable resin composition is such that the ratio of the number of amino groups in the foamable curing agent (A) to the number of cyclic carbonate groups in the cyclic carbonate compound (B) (number of amino groups/ number of cyclic carbonate groups) is 0.5 or more and 1.5 or less.

11. A polyhydroxyurethane resin foam obtained by foam molding the foamable resin composition according to any one of claims 1 to 10.

12. A method for producing a polyhydroxyurethane resin foam, comprising a step of foam molding the foamable resin composition according to any one of claims 1 to 10.

13. A foamable curing agent for molding a polyhydroxyurethane resin foam, comprising:
a reaction product (a2) of an amine compound (a1) and carbon dioxide.

14. The foamable curing agent according to claim 13, wherein a percentage increase of a mass of the amine compound (a1) calculated by the following equation when the amine compound (a1) is left to stand in an air environment of 23°C and 50% RH for a week is 10% by mass or more and 50% by mass or less:
percentage increase of mass of amine compound (a1) [% by mass] = 100 × amount of increase of mass of amine compound (a1) (g) / (mass of amine compound (a1) (g) + amount of increase of mass of amine compound (a1) (g)).

15. The foamable curing agent according to claim 13 or 14, wherein the amine compound (a1) comprises a cyclic amine compound (a11) having a cyclic structure.

16. The foamable curing agent according to claim 15, wherein the cyclic amine compound (a11) has an amino group bonded to a primary carbon atom.

17. The foamable curing agent according to claim 15 or 16, wherein the cyclic structure of the cyclic amine compound (a11) comprises at least one selected from the group consisting of a five-membered ring and a six-membered ring.

18. The foamable curing agent according to any one of claims 13 to 17, wherein the amine compound (a1) has 2 or more and 6 or less amino groups.

19. The foamable curing agent according to any one of claims 13 to 18, wherein the amine compound (a1) comprises at least one selected from the group consisting of o-xylylenediamine and derivatives thereof, m-xylylenediamine and derivatives thereof, p-xylylenediamine and derivatives thereof, bis(aminomethyl)cyclohexane and derivatives thereof, limonenediamine and derivatives thereof, and isophoronediamine and derivatives thereof.
